# DEMANDE DE BREVET EUROPEEN

(11) **EP 2 184 653 A1**
(43) Date de publication de la demande: **12.05.2010**
(21) Numéro de dépôt: 08168453.2
(22) Date de dépôt: 06.11.2008
(51) Int. Cl.: G04B 17/06, G04D 3/00

(54) **Spiral à élévation de courbe en matériau micro-usinable**

(71) Demandeur: MONTRES BREGUET S.A., 1344 L'Abbaye (CH)
(72) Inventeur: Zaugg, Alain, 1348, Le Brassus (CH); Bifrare, Christophe, 1342, Le Pont (CH)
(74) Mandataire: Couillard, Yann Luc Raymond

(57) **Abrégé**

L'invention se rapporte à un spiral (1) à élévation de courbe en matériau micro-usinable comportant un ressort-spiral (3) monté en une seule pièce et coaxialement avec une virole (5). Selon l'invention, le spiral comporte une courbe terminale (7) et un dispositif d'élévation (9) entre de la spire externe (15) dudit ressort-spiral et ladite courbe terminale afin d'améliorer la concentricité de développement dudit spiral.

L'invention se rapporte également au procédé de fabrication dudit spiral.

L'invention concerne le domaine des mouvements horlogers.

## Description

### Domaine de l'invention

L'invention se rapporte à un spiral à élévation de courbe et son procédé de fabrication et, plus particulièrement, à un tel spiral réalisé à base d'un matériau micro-usinable.

### Arrière plan de l'invention

L'organe régulateur d'une pièce d'horlogerie comporte généralement un volant d'inertie appelé balancier et un résonateur appelé spiral. Ces pièces sont déterminantes pour la qualité de marche de la pièce d'horlogerie. En effet, ils régulent la marche du mouvement, c'est-à-dire qu'ils contrôlent sa fréquence.

Il est connu de fabriquer une partie d'une pièce d'horlogerie en matériau à base de silicium. En effet, l'utilisation d'un matériau micro-usinable comme le silicium présente des avantages en terme de précision de fabrication grâce aux avancées des procédés actuels notamment dans le domaine de l'électronique. Il permet en outre de bénéficier de sa très faible sensibilité au magnétisme et au changement de température. Cependant, les parties à réaliser doivent être planes, il n'est actuellement pas possible de réaliser des pièces en silicium à plusieurs niveaux.

### Résumé de l'invention

Le but de la présente invention est de pallier tout ou partie les inconvénients cités précédemment en proposant un spiral à élévation de courbe en matériau micro-usinable de fabrication simple et qui autorise un écart de marche réduit.

A cet effet, l'invention se rapporte à un spiral à élévation de courbe en matériau micro-usinable comportant un ressort-spiral monté en une seule pièce et coaxialement avec une virole **caractérisé en ce qu**'il comporte une courbe terminale et un dispositif d'élévation entre de la spire externe dudit ressort-spiral et ladite courbe terminale afin d'améliorer la concentricité de développement dudit spiral.

Avantageusement, à partir de parties planes réalisées dans un matériau micro-usinable, on réalise un assemblage simple à plusieurs plans quasiment insensible au magnétisme et au changement de température qui ne nécessite plus les étapes complexes de mises au point actuellement effectuées pour la fabrication d'un tel spiral à partir d'une lame métallique.

Conformément à d'autres caractéristiques avantageuses de l'invention :
- le dispositif d'élévation comporte une attache mécanique reliant une extrémité de ladite spire externe à une extrémité de ladite courbe terminale ;
- l'attache mécanique comporte un corps principal prolongé de chaque côté par un moyen de pincement ;
- chaque moyen de pincement comporte un profil sensiblement en U afin de recevoir par recouvrement une desdites extrémités ;
- le dispositif d'élévation comporte en outre des moyens de solidarisation entre ladite attache mécanique et lesdites extrémités afin d'améliorer la force de fixation dudit dispositif d'élévation ;
- les moyens de solidarisation comportent une couche comportant un matériau adhésif, un matériau métallique, un oxyde ou un alliage de fusion des matériaux utilisés ou même une brasure
- ledit matériau micro-usinable est à base de silicium, de silice cristallisée ou d'alumine cristallisée ;
- la courbe terminale est du type Phillips afin d'améliorer la concentricité de développement dudit spiral
- au moins une spire interne du ressort-spiral comporte une courbe du type Grossmann afin d'améliorer la concentricité de développement dudit spiral

De plus, l'invention se rapporte à une pièce d'horlogerie **caractérisée en ce qu**'elle comporte un spiral à élévation de courbe conforme à l'une des variantes précédentes.

Enfin, l'invention se rapporte à un procédé de fabrication d'un spiral à élévation de courbe comportant l'étape suivante :
a) graver sélectivement au moins une cavité dans une couche de matériau micro-usinable pour définir un ressort-spiral monté coaxialement avec une virole ;
**caractérisé en ce qu**'il comporte en outre les étapes suivantes :
b) graver sélectivement au moins une cavité dans une couche de matériau micro-usinable pour définir une attache mécanique ;
c) graver sélectivement au moins une cavité dans une couche de matériau micro-usinable pour définir une courbe terminale ;
d) assembler l'attache mécanique entre ledit ressort-spiral et ladite courbe terminale afin de former le spiral à élévation de courbe.

Avantageusement, à partir de peu d'étapes, il est réalisé un spiral en matériau micro-usinable avec une meilleure précision par rapport aux étapes complexes de mises au point actuellement effectuées pour la fabrication d'un tel spiral à partir d'une lame métallique.

Conformément à d'autres caractéristiques avantageuses de l'invention :
- le procédé comporte après ou avant l'étape d), l'étape d'oxydation afin d'améliorer la force de fixation de ladite attache mécanique ou afin de rendre plus résistant mécaniquement et d'ajuster le coefficient thermo-élastique dudit spiral à élévation de courbe ;
- le procédé comporte avant ou après l'étape d), l'étape de dépôt d'un matériau adhésif entre ladite attache mécanique et lesdits ressort-spiral et courbe terminale ;
- le procédé comporte pendant ou avant ou après l'étape d), l'étape de dépôt d'un matériau entre lesdits ressort-spiral et courbe terminale et les surfaces de ladite attache mécanique destinées à les recevoir permettant de chasser ou braser ces premiers contre ladite attache afin d'améliorer la force de fixation de ladite attache mécanique ;
- les étapes a), b) et c) sont réalisées en même temps dans la même couche de matériau micro-usinable ;
- le procédé comporte l'étape finale de chauffage dudit spiral à élévation afin d'améliorer la force de fixation de ladite attache mécanique ou dans le but d'activer ledit matériau adhésif.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective d'un spiral à élévation de courbe selon l'invention ;
- la figure 2 est une représentation vue de dessus de la figure 1 ;
- la figure 3 est une représentation de la coupe A-A de la figure 2 ;
- la figure 4 est un schéma fonctionnel des étapes du procédé de fabrication.

### Description détaillée des modes de réalisation préférés

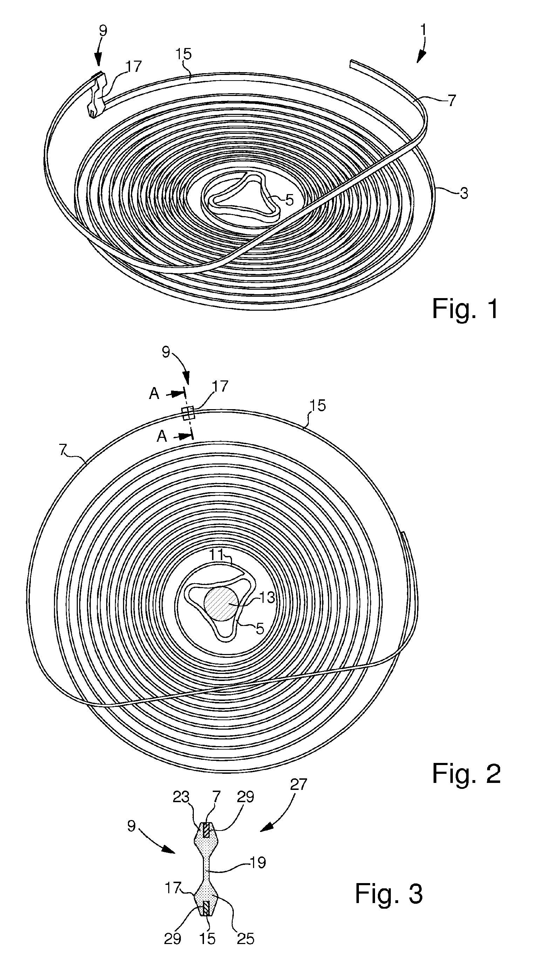

Dans l'exemple illustré aux figures 1 à 3, on peut voir un spiral à élévation de courbe généralement annoté 1. Le spiral 1 est destiné à être monté dans une pièce d'horlogerie en coopération avec un balancier. Il comporte un ressort-spiral 3, une virole 5, une courbe terminale 7 et un dispositif d'élévation 9. Préférentiellement, le ressort-spiral 3 et la virole 5 forment une pièce unique afin d'éviter les imprécisions au niveau de leur interface qui nuiraient à la symétrie de développement du spiral 1.

Comme illustré aux figures 1 et 2, on peut voir que le ressort-spiral 3 comporte préférentiellement une spire interne 11 comprenant une courbe du type Grossmann. Une courbe du type Grossmann permet de compenser l'utilisation d'une virole 5 en rectifiant la spire interne 11 par rapport à la courbe idéale d'un spiral parfait du type Archimède. A ces mêmes figures 1 et 2, on peut voir que la virole 5 est de forme générale triangulaire et est apte à recevoir un axe 13 de balancier. Bien entendu, la forme générale de l'axe 13 de balancier peut différer sans sortir du cadre de l'invention.

Préférentiellement, dans l'exemple illustré aux figures 1 et 2, la courbe terminale 7 est du type Phillips, c'est-à-dire une courbe qui, pendant le développement du spiral 1, permet de garder un centre de gravité situé sur l'axe 13. De manière préférée, comme illustré à la figure 2, les hauteurs de la courbe terminale 7 et du ressort-spiral 3 sont identiques.

Grâce au respect de la géométrie de la courbe terminale 7 et de l'ensemble ressort-spiral 3 - virole 5 exposée ci-dessus, le développement symétrique du spiral 1 est structurellement garanti, cependant, le type de fabrication et le matériau utilisé ne doivent pas fausser le développement.

Afin de garantir la précision de fabrication de ces courbes mais également pour rendre quasiment insensible le spiral 1 au magnétisme et au changement de température, on peut utiliser un matériau à base de silicium. En effet, c'est un matériau micro-usinable, c'est-à-dire un matériau qui peut être fabriqué avec une précision inférieure au micromètre, par exemple, par gravure ionique réactive profonde d'une plaque à base de silicium cristallin (également connu sous l'abréviation « DRIE » venant des termes anglais « Deep Reactive Ion Etching »).

Bien entendu, le silicium n'est pas le seul matériau qui possède ces caractéristiques. D'autres matériaux micro-usinables sont envisageables comme, par exemple, la silice cristallisée ou l'alumine cristallisée.

Préférentiellement, le matériau à base de silicium peut également être recouvert de son oxyde afin d'adapter sa dilatation mais également son coefficient thermoélastique par rapport à celui du balancier afin de régler finement l'isochronisme du mouvement de la pièce d'horlogerie, c'est-à-dire rendre minimal son écart de marche.

Afin de réaliser le spiral à élévation de courbe 1, également appelé spiral Breguet, il est utilisé un dispositif d'élévation 9 destiné à rendre solidaires la spire externe 15 du ressort-spiral 3 avec la courbe terminale 7 située au-dessus dudit ressort-spiral. Comme illustré aux figures 1 à 3, le dispositif d'élévation 9 comporte une attache mécanique 17 comprenant un corps principal 19 prolongé de chaque côté par un moyen de pincement 23, 25. Comme pour la courbe terminale 7 et l'ensemble ressort-spiral 3 - virole 5, l'attache mécanique 17 est également préférentiellement réalisée à partir d'un matériau micro-usinable comme, par exemple, un matériau à base de silicium.

Comme illustré en coupe à la figure 3, le corps principal 19 de l'attache mécanique 17 est sensiblement parallélépipédique et comporte une épaisseur sensiblement équivalente aux hauteurs de la courbe terminale 7 et de la spire externe 15 du ressort-spiral 3. Les moyens de pincement 23, 25 sont sensiblement symétriques par rapport au corps principal 19 et comportent chacun un profil sensiblement en U destiné respectivement à s'attacher à l'extrémité de la courbe terminale 7 et à l'extrémité de la spire externe 15 du ressort-spiral 3 par recouvrement au moins partiel.

Dans l'exemple illustré aux figures 1 à 3, les profils en U sont réalisés sur toute la largeur de l'attache mécanique 17 et recouvrent respectivement toute l'épaisseur de la courbe terminale 7 et de la spire externe 15 du ressort-spiral 3 en ne laissant qu'une des faces parallèles aux hauteurs non recouverte. Bien entendu, les profils des moyens de pincement 23, 25 peuvent être différents l'un par rapport à l'autre et/ou ne pas être uniformes sur toute la largeur de l'attache mécanique 17 et/ou s'étendrent que sur une partie de ladite largeur. Il peut également être envisagé qu'au moins un des profils ne soit pas en forme de U mais sensiblement en forme circulaire, elliptique, carrée ou rectangulaire permettant ainsi d'entièrement recouvrir l'extrémité de la courbe terminale 7 et/ou de la spire externe 15 du ressort-spiral 3.

Préférentiellement, le dispositif d'élévation 9 comporte également des moyens de solidarisation 27 destinés à améliorer la force de fixation du dispositif d'élévation 9. Selon l'invention, plusieurs variantes de moyens de solidarisation sont possibles suivant le procédé utilisé comme expliqué ci-après. Ainsi, les moyens de solidarisation comportent une couche 29 entre l'attache mécanique 17 et les extrémités de la courbe terminale 7 et de la spire externe 15 du ressort-spiral 3. Une telle couche 29 peut ainsi comporter un matériau adhésif, un matériau métallique, un oxyde ou un alliage de fusion des matériaux utilisés ou même une brasure.

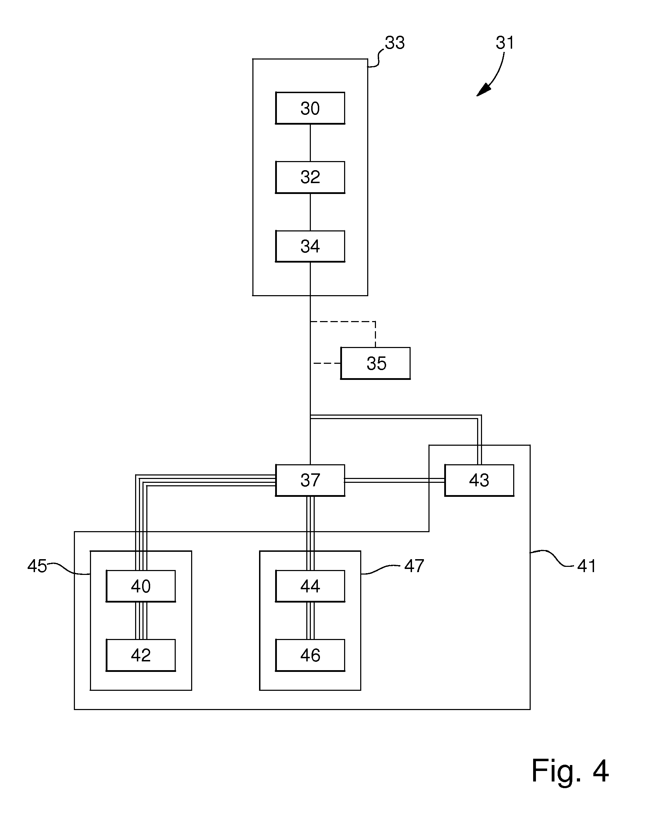

Le procédé 31 de fabrication d'un spiral à élévation de courbe 1 selon l'invention va maintenant être expliqué à l'aide de la figure 4. Le procédé 31 comporte principalement une étape 33 de fabrication des composants et une étape 37 d'assemblage des composants. Préférentiellement, le procédé comporte également une étape 35 de renforcement mécanique desdits composants et une étape 41 de renforcement de l'assemblage.

Comme illustré à la figure 4, la première étape 33 est destinée à fabriquer lors des phases respectives 30, 32 et 34 les composants du spiral à élévation de courbe 1, c'est-à-dire l'ensemble ressort-spiral 3 - virole 5, la courbe terminale 7 et le dispositif d'élévation 9. Préférentiellement, afin de fabriquer lesdits composants de manière très précises, on utilise un procédé de micro-usinage par voie sèche ou humide. Dans l'exemple expliqué ci-dessus, le micro-usinage peut être une attaque sèche anisotropique du type gravure ionique réactive profonde d'une plaque à base de silicium cristallin (également connu sous les termes anglais « Deep Reactive Ion Etching »).

Ainsi, les phases 30, 32 et 34 consistent dans un premier temps à revêtir la plaque d'un masque de protection, par exemple, à l'aide d'un procédé de photolithographie d'un résine photosensible. Dans un deuxième temps, la plaque est soumise à l'attaque anisotropique, seules les parties de la plaque non protégées étant gravées. Finalement dans un troisième temps, le masque de protection est retiré. On comprend donc que le masque de protection détermine directement la forme finale des composants gravés.

Avantageusement, il est ainsi aisé de fabriquer le spiral à élévation de courbe 1 selon les cotes de mouvements ou calibres existants. Ainsi, de manière avantageuse, les mouvements ou calibres peuvent toujours être fabriqués en intervertissant uniquement le spiral à élévation de courbe métallique utilisé habituellement par le nouveau fabriqué en matériau micro-usinable avec une amélioration de leur écart de marche et de leur qualité.

Préférentiellement, on comprend également qu'il est possible de réaliser les phases 30, 32 et 34 de l'étape 33 en même temps sur la même plaque. On peut donc conclure qu'il est possible de graver sur ladite plaque tous les composants nécessaires en plusieurs exemplaires.

La deuxième étape 37 est destinée à assembler les composants gravés lors de l'étape 33, c'est-à-dire l'ensemble ressort-spiral 3 - virole 5, la courbe terminale 7 et le dispositif d'élévation 9. A cet effet, dans un premier temps, chaque composant nécessaire est détaché de la plaque gravée, par exemple par rupture de ponts de matière laissés entre chaque composant et sa plaque. Dans un deuxième temps, les trois composants plats sont assemblés afin de réaliser la spiral 1 à partir de trois parties. Dans ce deuxième temps, l'extrémité de la spire externe 15 du ressort-spiral 3 est ainsi emboîtée dans un des moyens de pincement 25 de l'attache mécanique 17 puis celle de la courbe terminale 7 dans l'autre moyens de pincement 23.

Préférentiellement, à la fin de l'étape 37, le spiral 1 comporte une hauteur globale égale à deux fois l'épaisseur de la plaque gravée, représentant la courbe terminale 7 et l'ensemble ressort-spiral 3 - virole 5, et la longueur de l'attache mécanique 17 qui ne recouvre pas ces derniers. En effet, l'attache mécanique 17 est préférentiellement gravée dans la plaque selon le motif de la figure 3.

Comme expliqué ci-dessus, le procédé 31 peut également comporter une étape 35 destinée à renforcer les composants gravés. Par rapport à l'exemple d'un matériau à base de silicium, une telle étape peut consister à réaliser une oxydation par plasma apte à créer en surface du dioxyde de silicium. Dans l'exemple illustré en traits discontinus à la figure 4, l'étape 35 de renforcement est réalisée entre l'étape 33 de gravage et l'étape 37 d'assemblage ce qui permet d'oxyder la plaque gravée entière, c'est-à-dire tous les composants en même temps. Bien entendu, l'étape 35 peut également être réalisé après les phases 30 et/ou 32 et/ou 34.

Comme expliqué ci-dessus, le procédé 31 peut également comporter une étape 41 destinée à renforcer l'assemblage des composants gravés. Dans l'exemple illustré à la figure 4, on distingue trois modes de réalisation distincts dont les processus sont représentés à l'aide de traits double, triple ou quadruple.

Selon un premier mode de réalisation illustré par un trait double à la figure 4, l'étape 41 de renforcement peut consister à déposer, lors d'une phase 43, une couche 29 à l'intérieur des moyens de pincement 23 et/ou 25 afin d'autoriser les chassage de l'attache mécanique 17 sur les extrémités de la courbe terminale 7 et de la spire externe 15 du ressort-spiral 3. Ainsi, dans l'exemple cité ci-dessus du matériau à base de silicium, une telle couche 29 pourrait consister en une couche métallique obtenue, par exemple, par dépôt physique en phase vapeur. En effet, l'absence de domaine plastique du silicium, peut nécessiter l'utilisation d'une couche 29 apte à se déformer pour éviter la rupture des moyens de pincement 23, 25 car la force de chassage nécessaire au bon fonctionnement du spiral 1 peut générer une contrainte supérieure à la limite de la zone élastique dudit silicium.

Bien entendu, alternativement, les couches 29 peuvent également être déposées non pas à l'intérieur des moyens de pincement 23, 25 mais sur les extrémités de la courbe terminale 7 et de la spire externe 15 du ressort-spiral 3. On comprend donc, dans l'exemple illustré par un trait double à la figure 4, que les couches 29 doivent être, dans le premier mode de réalisation, déposées avant l'étape 37 d'assemblage. Cependant, le dépôt de la phase 43 peut également consister en une couche 29 de brasure. Le brasage pourrait alors s'effectuer soit pendant l'étape 37 d'assemblage soit après.

Selon un second mode de réalisation illustré par un trait quadruple à la figure 4, l'étape 41 de renforcement de l'assemblage peut consister à déposer, lors d'un processus 45, une couche adhésive 29 entre les moyens de pincement 23 et/ou 25 et la courbe terminale 7 et de la spire externe 15 du ressort-spiral 3 afin d'améliorer la force de fixation du dispositif d'élévation 9. Ainsi, une première phase 40 peut consister à déposer un matériau adhésif à l'interface des composants assemblés puis, préférentiellement, dans une deuxième phase 42 à chauffer l'ensemble afin d'activer ledit matériau adhésif. Une telle couche 29 pourrait alors consister, par exemple, en une couche de colle polymère.

Bien entendu, alternativement, la phase de dépôt 40 peut également être réalisée avant l'étape 37 d'assemblage si le matériau adhésif à l'état non activé n'est pas assez visqueux. Le dépôt pourrait alors être effectué à l'intérieur des moyens de pincement 23, 25 et/ou sur les extrémités de la courbe terminale 7 et de la spire externe 15 du ressort-spiral 3 avant l'étape 37 d'assemblage et, préférentiellement, chauffés, après l'étape 37 d'assemblage, lors de la phase 42. On comprend donc, dans cet exemple du second mode de réalisation, que les couches 29 permettent, grâce à leur pourvoir d'adhérence, de fermement maintenir l'assemblage en place.

Selon un troisième mode de réalisation illustré par un trait triple à la figure 4, l'étape 41 de renforcement de l'assemblage peut consister à former, lors d'un processus 47, une couche de solidarisation 29 entre les moyens de pincement 23 et/ou 25 et la courbe terminale 7 et du ressort-spiral 3 afin d'améliorer la force de fixation du dispositif d'élévation 9.

Ainsi, dans l'exemple cité ci-dessus du matériau à base de silicium, une première phase 44 peut consister à oxyder, par exemple par attaque plasma, la surface du spiral 1 à base de silicium afin de former une gangue en dioxyde de silicium apte à améliorer la solidarisation ses composants assemblés puis, préférentiellement, dans une deuxième phase 46 à chauffer l'ensemble afin de parfaire ladite solidarisation.

Bien entendu, alternativement, la phase d'oxydation 44 peut également être réalisée avant l'étape 37 d'assemblage et remplacée par l'étape optionnelle d'oxydation 35. Ainsi, les composants déjà oxydés seraient assemblés lors de l'étape 37 et, préférentiellement, chauffés lors de la phase 46 afin de créer une couche 29 unique en dioxyde de silicium à l'interface entre l'attache mécanique 17, la courbe terminale 7 et le ressort-spiral 3. On notera qu'une phase d'hydrophilisation préalable à la phase 46 de chauffage permet d'améliorer l'étape d'unification des couches de dioxyde de silicium. On comprend donc, dans cet exemple du troisième mode de réalisation, que les couches 29, comme les deux autres modes de réalisation, un renforcement de l'assemblage entre l'attache mécanique 17, la courbe terminale 7 et le ressort-spiral 3.

Enfin, à titre d'alternative au troisième mode de réalisation, il peut être envisagé un processus 47 comportant une unique étape 46 de chauffage des composants en silicium assemblés lors de l'étape 37 destinée à souder les interfaces sous contraintes desdits composants.

## Revendications

1. Spiral (1) à élévation de courbe en matériau micro-usinable comportant un ressort-spiral (3) monté en une seule pièce et coaxialement avec une virole (5) **caractérisé en ce qu'**il comporte une courbe terminale (7) et un dispositif d'élévation (9) entre de la spire externe (15) dudit ressort-spiral et ladite courbe terminale afin d'améliorer la concentricité de développement dudit spiral.

2. Spiral (1) selon la revendication 1, **caractérisé en ce que** le dispositif d'élévation (9) comporte une attache mécanique (17) reliant une extrémité de ladite spire externe à une extrémité de ladite courbe terminale.

3. Spiral (1) selon la revendication 2, **caractérisé en ce que** l'attache mécanique (17) comporte un corps principal (19) prolongé de chaque côté par un moyen de pincement (23, 25).

4. Spiral (1) selon la revendication 3, **caractérisé en ce que** chaque moyen de pincement (23, 25) comporte un profil sensiblement en U afin de recevoir par recouvrement une desdites extrémités.

5. Spiral (1) selon la revendication 3 ou 4, **caractérisé en ce que** l'épaisseur dudit corps principal est sensiblement égale à la hauteur desdites extrémités.

6. Spiral (1) selon l'une des revendications 2 à 5, **caractérisé en ce que** le dispositif d'élévation (9) comporte en outre des moyens de solidarisation (27) entre ladite attache mécanique et lesdites extrémités afin d'améliorer la force de fixation dudit dispositif d'élévation.

7. Spiral (1) selon la revendication 6, **caractérisé en ce que** les moyens de solidarisation (27) comportent un matériau adhésif.

8. Spiral (1) selon l'une des revendications précédentes, **caractérisé en ce que** ledit matériau micro-usinable est à base de silicium.

9. Spiral (1) selon la revendication 8 dépendante de la revendication 6, **caractérisé en ce que** les moyens de solidarisation (27) comportent une couche d'oxyde dudit matériau micro-usinable.

10. Spiral (1) selon la revendication 8 ou 9, **caractérisé en ce qu'**il comporte au moins une partie en oxyde de silicium afin de le rendre plus résistant mécaniquement et d'ajuster son coefficient thermo-élastique.

11. Spiral (1) selon l'une des revendications précédentes, **caractérisé en ce que** la courbe terminale (7) est du type Phillips afin d'améliorer la concentricité de développement dudit spiral.

12. Spiral (1) selon l'une des revendications précédentes, **caractérisé en ce qu'**au moins une spire interne (11) du ressort-spiral (3) comporte une courbe du type Grossmann afin d'améliorer la concentricité de développement dudit spiral.

13. Pièce d'horlogerie **caractérisée en ce qu'**elle comporte un spiral à élévation de courbe (1) conforme à l'une des revendications précédentes.

14. Procédé de fabrication (31) d'un spiral à élévation de courbe (1) comportant l'étape suivante :
a) graver (30) sélectivement au moins une cavité dans une couche de matériau micro-usinable pour définir un ressort-spiral (3) monté coaxialement avec une virole (5) ;
**caractérisé en ce qu'**il comporte en outre les étapes suivantes :
b) graver (32) sélectivement au moins une cavité dans une couche de matériau micro-usinable pour définir une attache mécanique (17) ;
c) graver (34) sélectivement au moins une cavité dans une couche de matériau micro-usinable pour définir une courbe terminale (7) ;
d) assembler (37) l'attache mécanique (17) entre ledit ressort-spiral et ladite courbe terminale afin de former le spiral à élévation de courbe (1).

15. Procédé (31) selon la revendication 14, **caractérisé en ce que** ledit matériau micro-usinable est du silicium cristallin et **en ce que** le procédé comporte, en outre, après l'étape d), l'étape suivante :
e) oxyder (44) ledit spiral à élévation afin d'améliorer la force de fixation de ladite attache mécanique.

16. Procédé (31) selon la revendication 14, **caractérisé en ce que** le procédé comporte, en outre, avant ou après l'étape d), l'étape suivante :
g) déposer (40) un matériau adhésif entre ladite attache mécanique et lesdits ressort-spiral et courbe terminale ;
et **en ce que** la procédé comporte en outre l'étape finale suivante :
h) chauffer (42) ledit spiral dans le but d'activer ledit matériau adhésif afin d'améliorer la force de fixation de ladite attache mécanique.

17. Procédé (31) selon la revendication 14, **caractérisé en ce que** ledit matériau micro-usinable est du silicium cristallin et **en ce que** le procédé comporte, en outre, avant l'étape d), l'étape suivante :
i) déposer (43) un matériau métallique entre lesdits ressort-spiral et courbe terminale et les surfaces de ladite attache mécanique destinées à les recevoir permettant de chasser ces premiers contre ladite attache lors de l'étape d) afin d'améliorer la force de fixation de ladite attache mécanique.

18. Procédé (31) selon la revendication 14, **caractérisé en ce que** ledit matériau micro-usinable est du silicium cristallin et **en ce que** le procédé comporte, en outre, pendant ou après l'étape d), l'étape suivante :
i) déposer (43) un matériau de brasage entre lesdits ressort-spiral et courbe terminale et les surfaces de ladite attache mécanique destinées à les recevoir permettant de braser ces premiers contre ladite attache afin d'améliorer la force de fixation de ladite attache mécanique.

19. Procédé (31) selon l'une des revendications 14 à 18, **caractérisé en ce que** les étapes a), b) et c) sont réalisées en même temps (33) dans la même couche de matériau micro-usinable.

20. Procédé (31) selon l'une des revendications 14 à 19, **caractérisé en ce que** ledit matériau micro-usinable est du silicium cristallin et **en ce que** le procédé comporte, en outre, après les étapes a), b) et c), l'étape suivante :
j) oxyder (35, 44) ledit silicium afin de rendre plus résistant mécaniquement et d'ajuster le coefficient thermo-élastique dudit spiral à élévation de courbe.

21. Procédé (31) selon la revendication 14, 15 ou 20, **caractérisé en ce que** ledit matériau micro-usinable est du silicium cristallin et **en ce que** le procédé comporte, en outre, l'étape finale suivante :
f) chauffer (46) ledit spiral à élévation afin d'améliorer la force de fixation de ladite attache mécanique.
